# EUROPEAN PATENT SPECIFICATION

(11) **EP 3 483 405 B1**
(45) Date of publication and mention of the grant of the patent: **06.01.2021**
(21) Application number: 18204719.1
(22) Date of filing: 06.11.2018
(51) Int. Cl.: F01N 3/20

(54) **SCR DOSER**
SCR ZUMESSVENTIL
INJECTEUR SCR

(30) Priority: 09.11.2017 GB 201718559
(43) Date of publication of application: 15.05.2019
(73) Proprietor: Delphi Technologies IP Limited, Saint Michael (BB)
(72) Inventor: BRIERA, Pau M., Maidstone, KENT ME16 8RB (GB); TUROBIN-HARRINGTON, Philip, Minster, KENT CT12 4ET (GB)
(74) Representative: Delphi France SAS

(56) References cited:
- EP-A1- 1 593 419
- WO-A1-2010/040470
- DE-A1-102010 030 922

## Description

### TECHNICAL FIELD

The present invention relates to selective catalytic reagent (SCR) injector and more particularly to a filter member therein arranged.

### BACKGROUND OF THE INVENTION

Patent application GB2555115 presents a SCR doser adapted to be arranged in a SCR system wherein reagent fluid is sprayed by said doser in an exhaust pipe of an internal combustion engine. The doser is provided with a filter member fixed in a reagent conduit for retaining particles that may be present in the fluid.

When the engine stops, the SCR systems is purged removing reagent from the doser and from the connecting pipes. Despite the purging cycle some reagent quantity may remain in the system, the reagent being an aqueous liquid that freezes and expands below a freezing temperature (i.e. urea freezes below - 11°C), should remaining reagent freezes the injector would suffer severe damages.

Patent Application DE 10 2010 030 922 A1 discloses another SCR doser with an integrated filter that can move in translation when the liquid freezes.

### SUMMARY OF THE INVENTION

Accordingly, it is an object of the present invention to resolve the above mentioned problems in providing a selective Catalytic Reagent (SCR) doser adapted to be arranged on an exhaust line of an internal combustion engine as part of a SCR system, said doser has a body housing a reagent conduit extending from an inlet to a nozzle and, an injector assembly comprising an actuator and a valve member cooperating with a seat to enable or prevent spray of reagent through said nozzle. The doser further comprises filter assembly having a filtering mesh for retaining particles present in the reagent, said filter assembly being arranged in a first position wherein all the reagent is directed to flow through the mesh and, being free to move away from said first position where a portion of the flow is able to bypass the mesh, the filter assembly only moving when under internal ice pressure and returning to the first position when the reagent has thawed.

The SCR doser further comprises a seal arranged between the inlet and the filter assembly ensuring that when the filter assembly is in said first position all the reagent flows through the mesh.

In an embodiment of the invention, a magnet urges said filter assembly to said first position, a displacement of the filter assembly away from said first position acting against the magnetic force.

In another embodiment of the invention a spring urges said filter assembly to said first position, a displacement of the filter assembly away from said first position acting against the spring force.

### BRIEF DESCRIPTION OF THE DRAWINGS

The present invention is now described by way of example with reference to the accompanying drawings in which:
Figure 1 is a longitudinal section of a SCR doser as per a first embodiment of the invention.
Figure 2 is a detail of the doser of figure 1.
Figures 3 and 4 are sketches illustrating two operational stages of the doser of figure 1.
Figures 5 and 6 are sketches illustrating two operational stages of a doser made as per a second embodiment of the invention.

### DESCRIPTION OF THE PREFERRED EMBODIMENTS

In reference to the figures is described a selective catalytic reduction doser 10, hereafter SCR doser 10, adapted to be part of a SCR system 8 for spraying a reagent fluid such as a urea solution in an exhaust pipe, the reagent enabling reduction of NOx in the exhaust gases.

The SCR doser 10 comprises an injector assembly 12 enclosed in a housing 14 and comprising an actuator 16, being in the example an overmoulded solenoid, cooperating with an elongated valve member 20 adapted to slide along a longitudinal axis X in a through bore 22 axially extending through said solenoid. The bore 22 extends from a reagent inlet 24 to an outlet 26 forming a nozzle.

In the valve member 20 is drilled an axial through hole 28 defining a conduit enabling reagent to flow therein from said inlet 24 to said outlet 26.

The housing 14 comprises a thick circular base wall 32 at the periphery of which is welded a can 34 forming a cylindrical peripheral wall surrounding the injector assembly 12. The base wall 32 has an outer face 36 and an opposed inner face 38 transverse to the longitudinal axis X, and, a tubular protrusion 40 integral and axially extending from said inner face 38 protrudes inside the housing 14, said tubular protrusion 40 defining the peripheral wall of a recess 42 at the center of the bottom 44 of which a hole extending through the thickness of said base wall 32 opens and defines said reagent inlet 24. The base wall 32 is further provided with another through aperture 46 radially distant from said inlet and used for electric connection of the solenoid.

More particularly, said through bore 22 comprises a tubular jacket 48 which nozzle portion 50 enlarges to accommodate the arrangement of a seat member cooperating with a tip of the valve member thus defining said spray nozzle and, which inlet portion 52 extends in said recess 42 toward an inlet extremity 54 that is at a distance D from the recess bottom face 44. Also, a rubber O-ring 55 is arranged in the recess 42 to seal the annular space between the jacket inlet extremity 52 and the inner face of tubular protrusion 40.

In use, reagent entering the SCR doser 10 via the inlet 24 is filtered and, particles therein carried are retained in a filter assembly 56 arranged between the recess bottom face 44 and said jacket inlet extremity 54. Although alternatives can be easily designed, the filter assembly 56 shown has a bowler hat shape comprising a bowl-like filtering mesh 58 engaged in the jacket 48 and slightly extending in the inlet portion 52 and, a peripheral annular flat base 60 radially extending between the jacket inlet extremity 54 and the opening of the inlet 24. Furthermore, the filter assembly 56 comprises means for urging said filter 56 against the recess bottom face 44, a seal 62 being arranged between the base under face 64 and the recess bottom face 44, said base under face 64 being the face of the base facing the recess bottom face 44 and being opposed to a base upper face 66 facing the jacket inlet extremity 54. The base 60 being thinner than the distance D, the filter assembly 56 is able to move between a first position P1 where the seal 62 is sealingly compressed between said base under face 64 and the recess bottom face 44 forcing all the incoming reagent to flow through the mesh 58, and a second position P2 where the base 60 is moved away from the recess bottom face 44, closer to the jacket inlet extremity 54, the seal 62 not being in contact against either the base 60 or the recess bottom face 44 and, a portion of the incoming reagent being able to bypass the mesh and directly enter the bore 22.

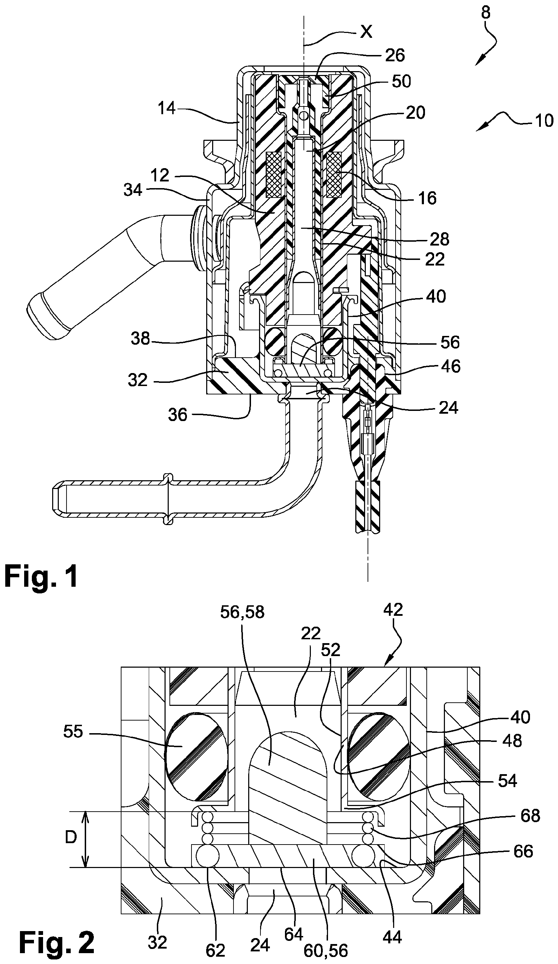

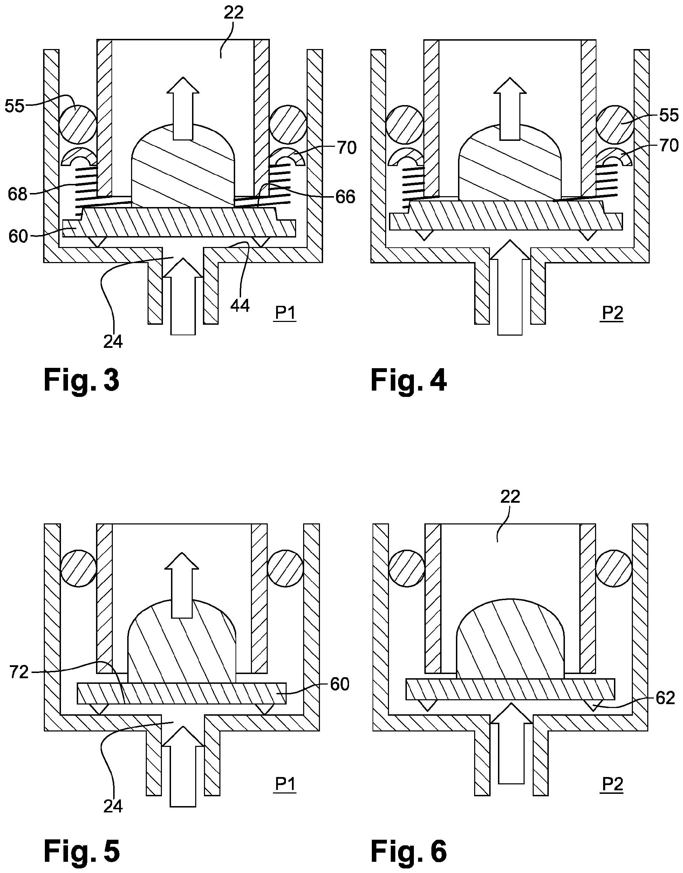

In a first embodiment shown on figures 2, 3 and 4 said means for urging the base 60 against the recess bottom face 44 is a coil spring 68 compressed between the base upper face 66 and a spring seat 70 fixed to the jacket. Said spring seat 70 can be integrally formed by outwardly shaping the jacket inlet extremity 54 as shown in figure 2 or, by welding a separate part on the outside of the jacket as sketched on figures 3 and 4.

In a second embodiment shown on figures 5 and 6 said means for urging the base 60 against the recess bottom face 44 is a magnet 72 attracting the base 60 toward the recess bottom face 44. The magnet 72 can be an independent member fixed to the base 60, or to the face 44 and, in another alternative the base 60 is entirely magnetic.

The seal 62, arranged between the base under face and the recess bottom face, is in a first alternative shown on figures land 2 a rubber O-ring placed in an annular groove provided on said base under face and, in a second alternative presented on the other figures 3, 4, 5 and 6 said seal 62 is an annular lip integrally fixed, or moulded, to said base under face, the lip having in the example shown a triangular section.

The alternatives of seals 62 are independent of the spring or magnet embodiments, all the combinations being possible.

In use, the filter assembly 56 is in the first position P1. When the engine stops the SCR system 8 runs a purge cycle removing the reagent fluid from the doser 10 and the connecting pipes of the system. It may happen that some reagent remains in said pipes or in the doser and, in the event that the global temperature falls below the freezing temperature of the reagent, for instance below -11°C for urea based reagent, said remaining reagent freezes solidifies and expands. In doing so, the icy reagent in the pipe pushes the filter assembly 56 from the first position P1 toward the second position P2 without causing any damages away. This opens a bypass enabling a liquid reagent to flow around the base 60 and directly enter the bore 22 but, the reagent being frozen, the remaining liquid quantity is insignificant.

When restarting the engine, the temperature rapidly rises and the reagent thaws enabling the filter assembly 56 to be urged by the spring 68, or the magnet 72, back to the first position P1.

### LIST OF REFERENCES

- X: longitudinal axis
- T: thickness
- D: distance
- P1: first position
- P2: second position

- 8: SCR system
- 10: SCD doser
- 12: injector assembly
- 14: housing
- 16: actuator
- 20: valve member
- 22: bore
- 24: inlet
- 26: outlet
- 28: axial hole
- 32: base wall
- 34: can
- 35: outer peripheral wall
- 36: outer face of the base wall
- 38: inner face of the base wall
- 40: tubular protrusion
- 42: recess
- 44: bottom face of the recess
- 46: aperture
- 48: jacket
- 50: jacket nozzle portion
- 52: jacket inlet portion
- 54: jacket inlet extremity
- 55: O-ring
- 56: filter assembly
- 58: mesh - crown
- 60: base - shim
- 62: seal
- 64: base under face
- 66: base upper face
- 68: spring
- 70: spring seat
- 72: magnet

## Claims

1. Selective Catalytic Reagent (SCR) doser (10) adapted to be arranged on an exhaust line of an internal combustion engine as part of a SCR system (8), said doser (10) having a body housing (14) a reagent conduit (22) extending from an inlet (24) to a nozzle (26) and, an injector assembly (12) comprising an actuator (16) and a valve member (20) cooperating with a seat to enable or prevent spray of reagent through said nozzle (26) and, a filter assembly (56) having a filtering mesh (58) for retaining particles present in the reagent, **characterized in that** said filter assembly (56) being arranged in a first position (P1) wherein all the reagent is directed to flow through the mesh and, being free to move away from said first position (P1) only when under internal ice pressure, a portion of the flow being able to bypass the mesh, the filter assembly (56) returning to the first position (P1) when the reagent has thawed.

2. SCR doser (10) as claimed in the preceding claim further comprising a seal (62) arranged between the inlet (24) and the filter assembly (56) ensuring that when the filter assembly is in said first position (P1) all the reagent flows through the mesh.

3. SCR doser (10) as claimed in claim 2 further comprising a magnet (72) urging said filter assembly (56) to said first position (P1), a displacement of the filter assembly (56) away from said first position (P1) acting against the magnetic force.

4. SCR doser (10) as claimed in claim 2 further comprising a spring (68) urging said filter assembly (56) to said first position (P1), a displacement of the filter assembly away from said first position acting against the spring force.

## Patentansprüche

1. Selektives katalytisches Reagenz (SCR - Selective Catalytic Reagent) Dosierer (10), der ausgebildet ist, an einer Abgasleitung eines Verbrennungsmotors als Teil eines SCR-Systems (8) angeordnet zu sein, wobei der Dosierer (10) aufweist ein Körpergehäuse (14), eine Reagenzleitung (22), die sich von einem Einlass (24) zu einer Düse (26) erstreckt, und eine Injektoranordnung (12), die einen Aktuator (16) und ein Ventilelement (20) aufweist, zusammenwirkend mit einem Sitz, um ein Sprühen von Reagenz durch die Düse (26) zu ermöglichen oder zu verhindern, und eine Filteranordnung (56) mit einem Filternetz (58) zum Zurückhalten von Partikeln, die in dem Reagenz vorhanden sind, **dadurch gekennzeichnet, dass** die Filteranordnung (56) in einer ersten Position (P1) angeordnet ist, in der das gesamte Reagenz zum Fluss durch das Netz geleitet wird, und sich nur dann von der ersten Position (P1) wegbewegen kann, wenn sie unter internem Eisdruck steht, wobei ein Teil des Flusses das Netz umgehen kann, wobei die Filteranordnung (56) in die erste Position (P1) zurückkehrt, wenn das Reagenz aufgetaut ist.

2. SCR-Dosierer (10) gemäß dem vorhergehenden Anspruch, der weiter eine Dichtung (62) aufweist, die zwischen dem Einlass (24) und der Filteranordnung (56) angeordnet ist, um sicherzustellen, dass, wenn die Filteranordnung in der ersten Position (P1) ist, das gesamte Reagenz durch das Netz fließt.

3. SCR-Dosierer (10) gemäß Anspruch 2, der weiter einen Magneten (72) aufweist, der die Filteranordnung (56) in die erste Position (P1) beeinflusst, wobei eine Verschiebung der Filteranordnung (56) weg von der ersten Position (P1) gegen die Magnetkraft wirkt.

4. SCR-Dosierer (10) gemäß Anspruch 2, der weiter eine Feder (68) aufweist, die die Filteranordnung (56) in die erste Position (P1) beeinflusst, wobei eine Verschiebung der Filteranordnung weg von der ersten Position gegen die Federkraft wirkt.

## Revendications

1. Doseur (10) pour réactif catalytique sélectif (SCR) adapté pour être agencé sur une ligne d'échappement d'un moteur à combustion interne en tant que partie d'un système SCR (8), ledit doseur (10) ayant un corps (14) logeant un conduit pour réactif (22) s'étendant depuis une entrée (24) jusqu'à une buse (26), et un assemblage d'injecteur (12) comprenant un actionneur (16) et un élément de valve (20) coopérant avec un siège pour permettre ou empêcher une pulvérisation de réactif à travers ladite buse (26), et un assemblage de filtre (56) ayant un tamis de filtrage (56) destiné à retenir des particules présentes dans le réactif, **caractérisé en ce que** ledit assemblage de filtre (56) est agencé dans une première position (P1) dans laquelle tout le réactif est dirigé pour s'écouler à travers le tamis, et est libre de se déplacer en éloignement de ladite première position (P1) uniquement quand, sous une pression de gel interne, une portion de l'écoulement étant capable de bypasser le tamis, l'assemblage de filtre (56) retourne à la première position (P1) quand le réactif a décongelé.

2. Doseur SCR (10) selon la revendication précédente, comprenant en outre un joint (62) agencé entre l'entrée (24) et l'assemblage de filtre (56), faisant en sorte que, quand l'assemblage de filtre est dans ladite première position (P1), tout le réactif s'écoule à travers le tamis.

3. Doseur SCR (10) selon la revendication 2, comprenant en outre un aimant (72) forçant ledit assemblage de filtre (56) jusqu'à ladite première position (P1), un déplacement du premier assemblage de filtre (56) en éloignement de la première position (P1) agissant contre la force magnétique.

4. Doseur SCR (10) selon la revendication 2, comprenant en outre un ressort (68) forçant ledit assemblage de filtre (56) jusqu'à ladite première position (P1), un déplacement du premier assemblage de filtre en éloignement de la première position agissant contre la force du ressort.
